# EUROPEAN PATENT SPECIFICATION

(11) **EP 2 782 041 B1**
(45) Date of publication and mention of the grant of the patent: **14.11.2018**
(21) Application number: 13160595.8
(22) Date of filing: 22.03.2013
(51) Int. Cl.: G06F 21/62

(54) **Analysis system ensuring that sensitive data are not accessible**
Analysesystem zur Sicherstellung der Unzugänglichkeit sensibler Daten
Système d'analyse assurant que des données sensibles ne sont pas accessibles

(43) Date of publication of application: 24.09.2014
(73) Proprietor: F. Hoffmann-La Roche AG, 4070 Basel (CH); Roche Diagnostics GmbH, 68305 Mannheim (DE)
(72) Inventor: Knafel, Andrzej, 6318 Walchwil (CH)
(74) Representative: Richardt Patentanwälte PartG mbB

(56) References cited:
- US-A1- 2003 145 222
- US-A1- 2012 060 008
- Wikipedia: "File deletion", Wikipedia.org, 22 February 2013 (2013-02-22), pages 1-2, XP055075272, DOI: 10.1109/MSP.2009.89) Retrieved from the Internet: URL:https://en.wikipedia.org/w/index.php?t itle=File_deletion&oldid=539688892 [retrieved on 2013-08-14]

## Description

### Field of the invention

The invention relates to the field of biological sample analysis systems, and more particularly to analysis system securing sensitive patient data from unauthorized access.

### Background and related art

Sensitive data, e.g. biomedical measurement data generated by an analysis system having analyzed a biological sample of a patient, must be protected from unauthorized access. To an increasing degree, the lab personnel use portable processing devices such as notebooks, tablet-PCs and smart phones for analyzing sensitive data and/or for managing, monitoring and controlling lab devices or other lab-related items and tasks. The portable device may be used in different rooms within a laboratory, but may also be carried outside the lab building and outside a company's or university's premises, e.g. in cases when the portable device is used during the job but also privately from home. This bears the risk that the portable device is lost or stolen, e.g. when a lab worker commutes in a public transport facility. Thus, sensitive data stored on the portable device may become accessible to unauthorized third parties.

Measurements for data protection on portable devices like password-authorization-based lock-mechanisms can easily be circumvented by a person having access to the hardware of the portable device and having specific knowledge and sufficient time. More secure lock-mechanisms being based e.g. on cryptographic keys may require a complex key management which is often impractical to use.

US 20110191862 describes a system and method for restricting access to requested data based on a location of the sender of the request. The described system and method requires the request-response system to be up and running. No protection is provided in case of a portable device being lost or stolen and in case of the unauthorized person has obtained possession of the hardware comprising the data to be protected.

US 7912455B2 discloses a method and system for data protection for applications which have registered with a storage cleaning mechanism. That the registered applications can receive a notification of impending storage cleaning operations from the storage cleaning mechanism. Upon receiving the notification, the registered applications can release or unreference storage so it can be cleaned of data.

### Summary

It is an objective of the invention to provide an improved analysis system and method for securing sensitive patient data stored on a portable device. This objective is solved by the features of the independent claims. Preferred embodiments of the invention are given in the dependent claims. If not explicitly indicated otherwise, embodiments of the invention can be freely combined with each other.

A 'user' as used herein is a human being who is represented and identified by a user-ID uniquely assigned to said user. The user may have registered at a program logic being part of the IT-infrastructure of a laboratory.

A 'biological sample' or 'sample' as used herein is a quantity of biological material, such as blood, urine, saliva, tissue slices, etc., for use in laboratory analyses or pre- and post- analytic processing.

The term 'analyzer' or 'analytical lab-device' as used herein encompasses any apparatus or apparatus component that can induce a reaction of a biological sample with a reagent for obtaining a measurement value. An analyzer is operable to determine via various chemical, biological, physical, optical or other technical procedures a parameter value of the sample or a component thereof. An analyzer may be operable to measure said parameter of the sample or of at least one analyte and return the obtained measurement value. The list of possible analysis results returned by the analyzer comprises, without limitation, concentrations of the analyte in the sample, a digital (yes or no) result indicating the existence of the analyte in the sample (corresponding to a concentration above the detection level), optical parameters, DNA or RNA sequences, data obtained from mass spectroscopy of proteins or metabolites and physical or chemical parameters of various types. The term analyzer as used herein encompasses also microscopes and any other kinds of lab devices operable to derive data from the sample which are indicative of a certain physiological, biochemical or diagnostically relevant feature.

A 'pre-analytical lab-device is a lab-device operable for executing one or more pre-analytical processing steps on one or more biological samples, thereby preparing the samples for one or more succeeding analytical tests. A pre-analytical processing step can be, for example, a centrifugation step, a capping-, decapping- or recapping step, an aliquotation step, a step of adding buffers to a sample and the like.

A 'post-analytical lab-device' is a lab-device being operable to automatically process and/or store one or more analyzed biological samples. Post-analytical processing steps may comprise a recapping step, a step of unloading a sample from an analyzer or a step of transporting said sample to a storage unit or to a unit for collecting biological waste.

An 'analysis system' as used herein comprises one or more analyzers. In addition, it may comprise one or more pre-analytical and/or post-analytical lab devices. An analysis system may comprise one or more control units operable to monitor and/or control the performance of the analyzer(s) and/or the pre-analytical and/or post-analytical lab devices. The control unit may be operable to evaluate and/or process gathered analysis data, to control the loading, storing and/or unloading of samples to and/or from the analyzer, to initialize an analysis or hardware or software operations of the analysis system used for preparing the samples, sample tubes or reagents for said analysis and the like. The one or more control units may be implemented as or comprise an application program installed on one or more portable devices which are considered as being part of the analysis system irrespective of their current location.

The term 'sensitive data' as used herein comprises patient data by which a patient can be identified. Said patient data may comprise a patient name, a birthday, an address or portion of an address, and/or a patient identifier (e.g. a social security number or health care insurance number, medical record identifier of the patient, email address or another unique identifier). In addition, the sensitive data may comprise medical and/or technical data, e.g. lab device operation data and/or measurement data associated with the patient. The measurement data may be obtained by processing a biomedical sample of a patient. The measurement data may likewise be image data such as X-ray or NMR images, images of stained tissue slices or the like. The sensitive data may further comprise measurement values, but may also comprise previous or current diagnoses and treatment information, address information of the patient, a patient-ID or the like. Lab device operation data is indicative of the type, operational state and/or the performance of a lab device. For example, the lab device operation data may comprise the number of samples processed per time, error statistics and parameters being indicative of the quality of analysis. It may indicate if the lab-device runs out of reagents or consumables or was halted due to a technical error.

A 'rule' is a computer interpretable set of instructions comprising at least one action and comprising one or multiple conditions, whereby the execution of the at least one action depends on an evaluation of the one or more conditions in respect to one or more input values. Executing a rule implies evaluating said conditions on the input value(s) and executing the at least one action in dependence on the evaluation result.

A 'portable device' as used herein is any data processing device which is portable by a human being. For example, a portable device may be a notebook, a tabloid, a mobile phone, in particular a smart phone, or the like.

The term 'biological sample' encompasses any kind of tissue or body fluid having been derived from a human or any other organism. In particular, a biological sample can be a whole blood-, serum-, plasma-, urine-, cerebral-spinal fluid-, or saliva-sample or any derivative thereof.

A 'security perimeter' is a geographic and/or spatial area whose boundaries are stored in a storage medium of or accessible by the portable device and which is considered as a protected zone in respect to data security. The security perimeter surrounds an analyzer of an analysis system and encompasses a pre-defined area around the analyzer. The area defined by the security perimeter can be of any shape or size, and can have sharply defined or approximately defined borders depending on the embodiment and location of the analyzer. Depending on the embodiment, the security perimeter may be specified as a circle with predefined center and radius, as a set of one or more buildings, as one or more rooms within a building, or the like. In particular, a security perimeter may be an area around the premises of a laboratory, a university, a hospital, or the like. The security perimeter can be defined, for example, by geoposition coordinates or the range of a transmitted signal (such as transmitted by a device in or near the analyzer), the loss of which by the portable device indicates that perimeter has been exceeded. Alternatively, the security perimeter can be defined by transmitters that provide a signal to the portable device that indicates the perimeter has been exceeded. Such transmitters could be transmitters located in one or more rooms surrounding the analyzer, through which a person carrying the portable device must pass when leaving the vicinity of the analyzer.

In one aspect, the invention relates to a method for ensuring that sensitive data stored in a storage medium of a portable device are not accessible to unauthorized persons. The sensitive data comprises patient data. The portable device determines its current position and determines if its current position lies within a predefined security perimeter. The predefined security parameter is defined such that it surrounds an analyzer of an analysis system, In case the current position is determined to lie outside the security perimeter, the portable device automatically erases the sensitive data from the storage medium.

Said features may ensure that in case the portable device gets lost or stolen and is moved outside the security perimeter, a location-dependent trigger mechanism actively removes the sensitive data from the storage medium, thereby ruling out the possibility that an unauthorized user having access to the hardware could crack insufficient security measures and could access the sensitive data.

Depending on the embodiment, the current position may be a geoposition, e.g. a GPS (geo-positioning service) coordinate. Likewise, the current position may be any kind of indicator of a position of the device relative to elements of a given map or relative to a coordinate system. The current position may also be a room number and/or a building number, an identifier of a department or a lab or the like.

According to embodiments the method further comprises the analyzer analyzing one or more biological samples of a patient, thereby generating analytical measurement data. The analytical measurement data is transmitted via a network from the analyzer to the portable device. The portable device stores said analytical measurement data in association with the sensitive data of the patient from whom the biological sample was drawn and who is identified by the patient data contained in the sensitive data. The user of the portable device may evaluate the analytical measurement data of the patient and use said evaluation to submit commands for monitoring and/or controlling further pre-analytical, analytical or post-analytical sample processing steps from the portable device to the analysis system.

According to some embodiments the erasing is executed in accordance with one or more rules. The rules may be stored, for example, on the storage device of the portable device or may be stored on a central server and be retrieved dynamically from the server if needed. At least one of the rules comprises a user-dependent erasing policy. The portable device receives an identifier of the user. The identifier, also being referred herein as 'user-ID', may be received e.g. upon the user logging into the portable device or into an application program running on the portable device and executing the above method. The portable device executes the rules, thereby taking the user identifier, the determined current position and the security perimeter as input. The user ID may be used for selecting some user-specific rules. In case the current position is determined to lie outside the security perimeter, the erasing is executed user-specifically, whereby the amount and/or kind of the sensitive data that is erased depend on the user identifier. The rules may be implemented e.g. in the form of compiled program code or program scripts. They may be implemented as part of an application executed on the portable device.

According to some embodiments, each user has assigned a role and corresponding role-ID. At least some of the rules are role-specific and implement role-specific erasing policies. According to embodiments, the roles and the corresponding rules are implemented in accordance with the ASTM Standard (American Society for Testing and Materials) E1986-09 and/or an ISO Standard such as ISO/TS 22600-1:2006, ISO/TS 22600-2:2006, lSO/DIS 22600-2, ISO/TS 22600-3:2009 and ISO/DIS 22600-3.

According to some embodiments, the storage medium of the portable device is a non-volatile storage medium. This may have the advantage that in case of a power failure, the data can be easily recovered from the non-volatile storage medium provided the portable device was meanwhile not moved outside the security perimeter.

According to other embodiments, the storage medium is a volatile storage medium. The sensitive data is never persisted to a non-volatile storage medium. This may further increase the security and may speed up the process of erasing the sensitive data.

According to still further embodiments, the storage medium comprises a volatile storage medium and a non-volatile storage medium respectively having stored the sensitive data or parts thereof. Erasing the sensitive data comprises erasing the sensitive data from the volatile and from the non-volatile storage medium. The erasing policy may be different for both kinds of storage media. According to embodiments, the volatile storage medium is the main memory of the portable device and the non-volatile storage medium is a hard disk, e.g. an electromagnetic storage device.

According to some embodiments, erasing the sensitive data from the storage medium comprises:
- Erasing the sensitive data by formatting the storage medium or formatting a partition comprising the sensitive data; this may provide for a particularly save erasing procedure; or
- Erasing the sensitive data by removing pointers to the sensitive data while leaving the sensitive data unchanged; this may provide for a particularly fast erasing procedure; or
- Erasing the sensitive data by removing pointers to the sensitive data and overwriting the sensitive data with automatically generated data patterns; the automatically generated data pattern may e.g. be a random data pattern; this may provide for a particularly save erasing procedure as after the overwriting is executed one or multiple times, any information which may still be contained in the physical memory blocks on formerly stored sensitive data is removed; or
- Changing or deleting a decryption key required for decrypting the sensitive data having been stored in the storage medium in an encrypted form. This may provide for a fast as well as secure way of erasing data.
In some embodiments multiple erasing strategies may be combined, e.g. the decryption key may be deleted and the storage medium may be formatted in addition.

According to some embodiments, the portable device requests the sensitive data from a data source. The data source may be a lab device, e.g. a pre-analytical, analytical or post-analytical lab-device, or a laboratory information system (LIS). The portable device requests the sensitive data only if its current position lies within the security perimeter at the moment of request submission. Then, the portable device receives the requested sensitive data from the data source. The requirement of the portable device to lie within the security perimeter for receiving the data may increase the security as it is ensured that also the data transfer is executed within a secure zone.

The lab device or a server hosting the LIS may lie outside or inside the security perimeter and may comprise interfaces enabling the portable device to exchange data with the portable device. In addition, or alternatively, said lab-devices and the LIS may receive data management commands, device management commands and/or control commands from the portable device.

The sensitive data or parts thereof, e.g. measurement data, may at first be transferred from a lab-device having gathered the data to a data processing device, typically a computer being part of the LIS. Said data processing device may act as an information hub for a plurality of other computers and lab-devices of the lab and/or as a common interface for receiving control commands directed at said lab-devices. The data processing device may collect measurement data, monitoring data and/or status information received from the lab devices. The transfer may be executed via a network, e.g. the lab-Intranet, or via a portable data carrier, e.g. an USB-stick. The data processing device may transmit said data as the sensitive data to a requesting portable device within the security perimeter. In addition, or alternatively, the data processing device may receive control commands, requests for further sensitive data or the like from the portable device and may use said received commands for controlling data processing operations and/or for controlling the operation of the lab devices.

According to some embodiments the erasing comprises evaluating a data set which comprises the sensitive data. The erasing can comprise selectively erasing the sensitive data while keeping the rest of the data set (e.g. identifiers of patient records which do not identify the corresponding patient, identifiers and statistics related to lab devices and reagents, alert messages etc) on the storage medium. In addition, or alternatively, the method may comprise storing or keeping stored identifiers of data records of the sensitive data to be erased from the storage medium. The storing or keeping stored is executed in a way as to enable a restoring of the erased data records upon a future determination that the current position of the portable device lies within the security perimeter. The method may further comprise the portable device determining that its current position again lies within the security perimeter and restoring the erased data records based on the non-erased record identifiers. The data records may be restored e.g. by sending requests comprising the record identifiers from the portable device to a data processing device acting as data source, e.g. a database server of the LIS, and retrieving the respective records identified via said record identifiers from the data source. This may be advantageous as the reconstruction and reloading of the data records may be accelerated without leaving any sensitive data on the portable device.

In other embodiments, erasing can comprise erasure of all data in a data set, either with or without the possibility to restore the erased data.

According to some embodiments, the portable device displays the lab-device operation data to the user and receives control input data entered by the user via a user-interface. The user interface may be a keyboard, a microphone, a touch screen or the like. The control input data is entered in dependence on the displayed lab-device operation data; upon receipt of the input data, the portable device submits a control command to a lab-device in accordance with the entered control input data only in case its current position lies within the security perimeter.

According to some embodiments the portable device continues to interactively request and receive further sensitive data from the data source in dependence on some actions of the user on the portable device. The interactive request-response operations may be performed by a server program hosted by the data source and by a client program running on the portable device. As long as the current position of the portable device is determined to lie inside the security perimeter, the application of the portable device stores the received sensitive data in the storage medium. Upon determining that the current position lies outside the security perimeter, the application erases the sensitive data.

According to some embodiments the portable device currently lying within the security perimeter automatically determines that a current distance between the portable device and the border of the security perimeter is below a distance threshold; this may happen when a user carrying the portable device is approaching the border of the security perimeter, e.g. when leaving the lab at the end of a working day. In response to said determination, the portable device outputs a notification to the user via a user interface of the portable device. The notification indicates that the user is about to leave the security perimeter and that the sensitive data in this case is to be erased. Thus, the user may stop his movement immediately in case he or she is currently working with the sensitive data via the portable device and was up to leave the security perimeter accidentally. Data loss due to an accidental stepping outside the security perimeter may thus be prohibited. The interface may be a graphic interface, an acoustic interface or the like.

According to some embodiments the portable device performs the erasing of the sensitive data in addition on any one of the following events: upon power-off of the portable device; upon a log-off event of the user from the portable device; upon shut-down of an application program executed on the portable device and performing the method of anyone of the previous embodiments; upon a log-off event of the user from said application program; upon receipt of an erasure command triggered by the user interacting with the portable device; upon the portable device receiving an erasure command submitted by a data processing device located within the security perimeter.

According to embodiments the determining of the current position and the decision if the sensitive data is to be erased is continuously repeated, e.g. upon fixed time intervals. In addition, the position dependent erasing may be executed upon receiving a user action, e.g. a clicking of a button, an acceleration of the portable device along any of its axes, or the like.

According to some embodiments the determining if the current position of the portable device lies within the security perimeter comprises: the portable device accessing geographic data being stored in the storage medium or in a further storage device operatively coupled to the portable device. The geographic data comprises location coordinates specifying the security perimeter, e.g. GPS data, one or more room-IDs and/or building-IDs and the like; then, the portable device determines if current geographic coordinates of the determined current position of the portable device lie within the location coordinates of the security perimeter. According to some embodiments, the location coordinates specifying the security perimeter may be editable by the user or an operator, e.g. via a graphical user interface, for facilitating the redefinition of the borders of the security perimeter.

The determination if the sensitive data is to be erased and the data erasing may be performed by a first application program executed on the portable device. The portable device may be a mobile phone and the application program may be a so called 'app'. The app may be implemented as native app wherein data is never stored or cached to a storage medium of the portable device unless an explicit storage function of said app is executed. Alternatively, the app is implemented as an internet browser executing a web-app provided by a second application running on the data processing device via a network. The data processing device may be a central server or one of the lab devices. Typically, a browser caches any received data, but upon execution of the erasing of the sensitive data, said cache is emptied.

The first application program is interoperable with the second application program which is executed on the data processing device. The data processing device may reside within or outside the security perimeter.

The first and second application programs interactively enable the user to execute one or more of the following steps:
- Analyzing the sensitive data stored in the storage medium of the portable device; and/or
- Editing or deleting individual data records of the sensitive data stored in the storage medium of the portable device via an interface of the portable device; any changes to said data records are automatically propagated to and synchronized with a copy of the sensitive data stored in a central storage medium; the central storage medium may be part of the LIS and accessible by the portable device remotely; and/or
- Controlling a lab-device for stopping, initiating or rescheduling the pre-analytical, analytical or post-analytical processing of a patient sample in dependence on the sensitive data presented to the user via a graphical user interface of the first application program; and/or
- Monitoring a lab-device executing a pre-analytical, analytical or post-analytical processing of a patient sample.

The data processing device hosting the second application program may be a computer of a LIS, a processor of a lab-device, a device-control-computer or the like. The data processing device may also act as or comprise the data source providing the sensitive data to the portable device. The data processing device may comprise or be operatively coupled to the central storage medium.

According to some embodiments the determination if the sensitive data is to be erased, the data erasing, the monitoring and/or controlling are executed in a manner being depended on the user and being dependent on the determined current position. Said dependency can be implemented by means of rules executed by the first application program.

In a further aspect the invention relates to a computer-readable storage medium comprising instructions which, when executed by a processor of a portable device cause the processor to perform the method of anyone of the above embodiments.

In a further aspect the invention relates to an analysis system which ensures that sensitive data are not accessible to unauthorized persons. The sensitive data comprises at least patient data. The analysis system comprises at least one analyzer for analyzing biological samples and a portable device. The portable device comprises a processor and a storage medium which comprises the sensitive data. The portable device further comprises position determining means operable to determine a current position of the portable device. The positioning means may be implemented as GPS sensor, as a local positioning system (LPS) module or the like. The portable device further comprises computer-interpretable instructions of an application program which, upon execution by the processor, cause the application program to execute a method comprising: triggering the determination of the current position of the portable device; in case the current position is determined to lie outside a security perimeter surrounding the at least one analyzer, causing the portable device to automatically erase the sensitive data from the storage medium.

Depending on the embodiment, the analyzer may be located at the center of the security perimeter or any other area within the security perimeter.

According to some embodiments, the position determining means are location services provided by the manufacturer of the portable device. For example, the portable device may be a mobile phone and the location services may be provided by the manufacturer of the mobile phone as inbuilt hardware functionality.

According to some embodiments the analysis system further comprises one or more additional sample processing lab-devices, for example pre-analytical and/or post-analytical lab-devices. The additional sample processing lab-devices may lie within the security perimeter or may lie outside the security parameter. Said additional lab-devices may be used for collecting additional sensitive data from the biological samples of a patient and for transmitting said sensitive data from the analysis system to the portable device. The additionally collected sensitive data may be measurement data.

The sample processing system may further comprise:
- a data processing unit being operable to forward the collected sensitive data to the application program of the portable device via a network; According to some embodiments, the data processing unit may be part of the analyzer or the additional lab device, thereby enabling the analyzer or the additional lab-device to act as data source and to directly forward the sensitive data to the portable device;
- a configuration unit allowing the first user or a second user to specify location coordinates of the security perimeter and/or to configure user-specific and/or position specific rules determining how the erasing is executed. The configuration unit may be part of the portable device and/or may be hosted by a data processing device connected to the portable device via a network.

The configuration may be executed by an operator of the lab remotely or by the user of the portable device via an interface of the portable device. The configuration may require the user or operator to authenticate at the LIS and/or the application program running on the portable device. Preferentially, the configuration via an interface of the portable device is prohibited by the portable device if its current position lies outside the security perimeter.

### Brief description of the drawings

In the following embodiments of the invention are explained in greater detail, by way of example only, making reference to the drawings in which:
- Figure 1: shows an analysis system comprising a portable device, a server, an analyzer and a further lab device,
- Figure 2: is a block diagram of a portable device,
- Figure 3: is a flowchart of a method executed by the portable device,
- Figure 4: shows a block diagram of two application programs interfacing with each other,
- Figure 5: depicts a portable device moved outside a security perimeter, and
- Figure 6: depicts a process diagram of said movement.

### Detailed description

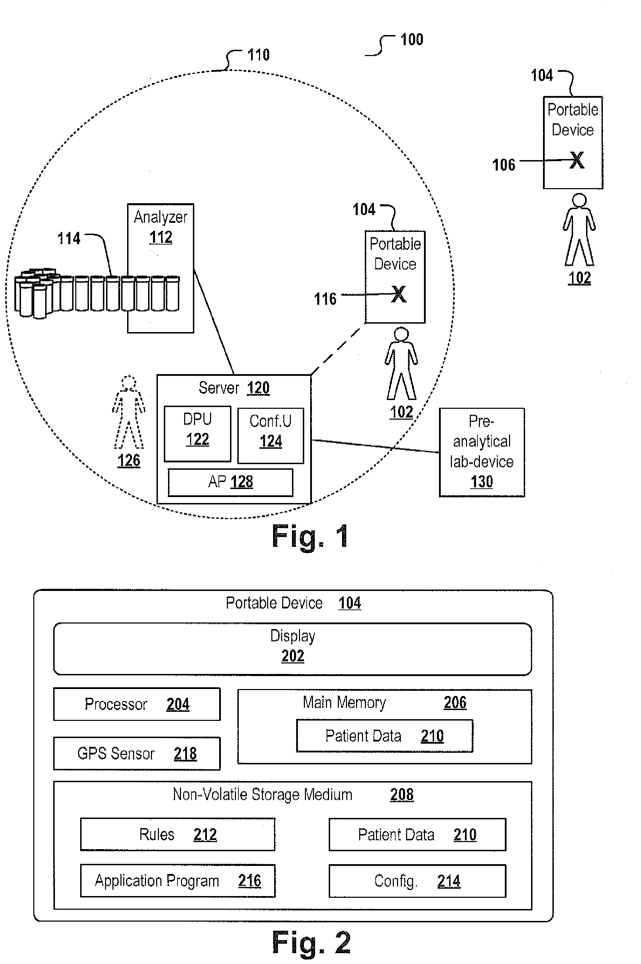

**Figure 1** shows a distributed analysis system 100 for ensuring that sensitive data stored in a storage medium of a portable device 104 of a user 102 are not accessible to unauthorized persons. This is ensured by the portable device automatically erasing the sensitive data from its storage medium upon the user 102 leaving a security perimeter 110. The security perimeter is considered here as geographic area wherein sensitive data stored on the portable device is considered to be safe.

The system comprises a server 120 having a data processing unit 122 and a configuration unit 124. The server further comprises an application program 128 interfacing with an application program running on the portable device. An operator 126 may use the configuration unit for configuring some rules stored in the server or the portable device which are responsible for executing the data erasure.
The system 100 further comprises an analyzer 112 which is operable to analyze some biological samples 114 of one or more patients. Measurement data gathered by the analyzer are transferred to the server. The biological samples may have been prepared for the analysis by a pre-analytical lab device 130 which may also send some patient-related data to the server 120. The server gathers sensitive data from one or more lab devices which may lie within (as the analyzer) or outside (as the pre-analytical lab device) the security perimeter. The server may then transfer the gathered sensitive data to the portable device 104 for enabling a user 102, e.g. a nurse or another medical professional or a technician to evaluate the sensitive data and/or to monitor or control the ongoing pre-analytical, analytical or post-analytical sample processing. The data transfer may be executed via a mobile phone connection. The server 120 or any lab-device acting as data source preferentially resides within the security perimeter 110 or within another protected zone to protect the sensitive data from the beginning. In other embodiments one or more of the lab devices acting as data sources may directly interface with the portable device.

The user 102 carrying his portable device 104 is depicted at two different positions 116, 106. When the portable device determines by means of its positioning unit its current position 116 to lie within the security perimeter 110, the sensitive data is transferred from the server to the portable device for storing the sensitive data at least temporarily to a storage medium of the portable device for enabling the user 102 to evaluate the sensitive data. When the portable device determines its current position 106 to lie outside the security perimeter, the portable device automatically erases the sensitive data stored in its storage medium.

**Figure 2** shows a block diagram of the portable device 104 and its components. The portable device comprises a positioning unit 218, in this case a GPS sensor, for determining its current position. It comprises a processor 204 and a main memory 206. Sensitive data 210 which may have been entered by the user 102 into the portable device and/or which may have been received from the server 120 is stored in the main memory. In addition, the depicted embodiment of the portable device comprises a non-volatile storage medium 208 comprising a copy of the sensitive data 210 or parts thereof. The storage medium 208 may also comprise some rules 212 for erasing the sensitive data 210 from the main memory and/or from the non-volatile storage medium 208 in case the positioning unit 218 determines that the portable device is outside the security perimeter. A configuration module 214 enables a user to configure the rules and/or the borders of the security perimeter stored in the portable device via a user interface of the portable device 104. In addition or alternatively, the rules and/or the borders of the security perimeter may be configured by an operator 126 of the analysis system remotely.

Application program 216 is operable to execute the rules for erasing the sensitive data in dependence on input received from the positioning unit 218. The application program 216 may be able to receive a user identifier from a user 102 for providing the user-ID as input to the rules 212 and for executing them in a user-specific manner. For example, some users may be considered as particularly trustworthy and reliable and the erasure of the data in this case may be limited to a particularly sensitive subset of the sensitive data.

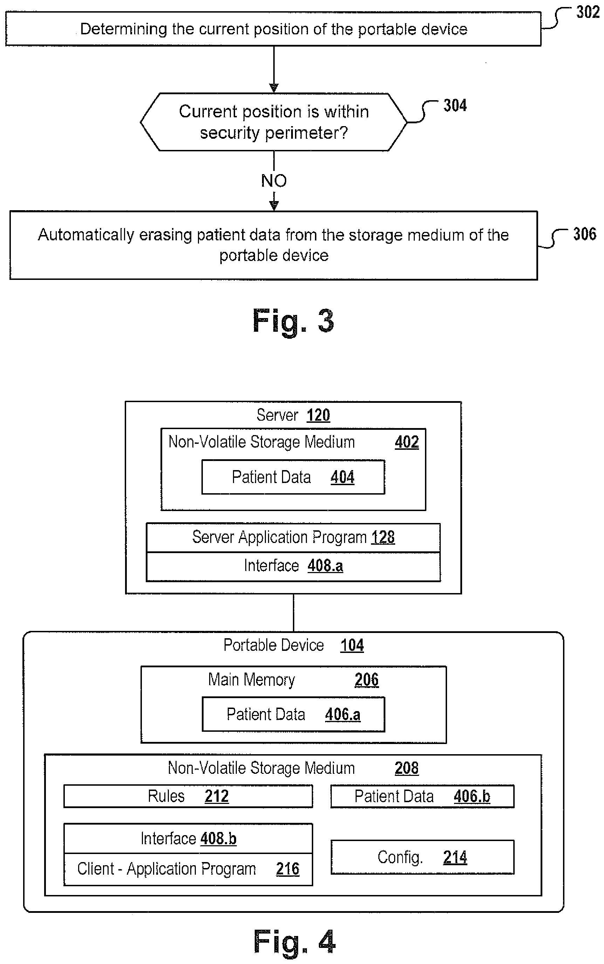

**Figure 3** shows a flowchart of a method executed by a portable device according to one embodiment for ensuring that sensitive data stored in a storage medium 206, 208 of the portable device 104 cannot be accessed by an unauthorized person. In step 302 the portable device determines its current position. In step 304 the portable device determines if its current position lies within a predefined security perimeter surrounding an analyzer of an analysis system. This may be done e.g. by comparing the current position of the portable device with a set of location coordinates specifying the security perimeter. The set of location coordinates may have the form of a geographic map. In case the current position of the portable device was determined to lie outside the security perimeter, in step 306 the portable device, e.g. by executing some rules 212, erases the sensitive data from the storage medium of the portable device.

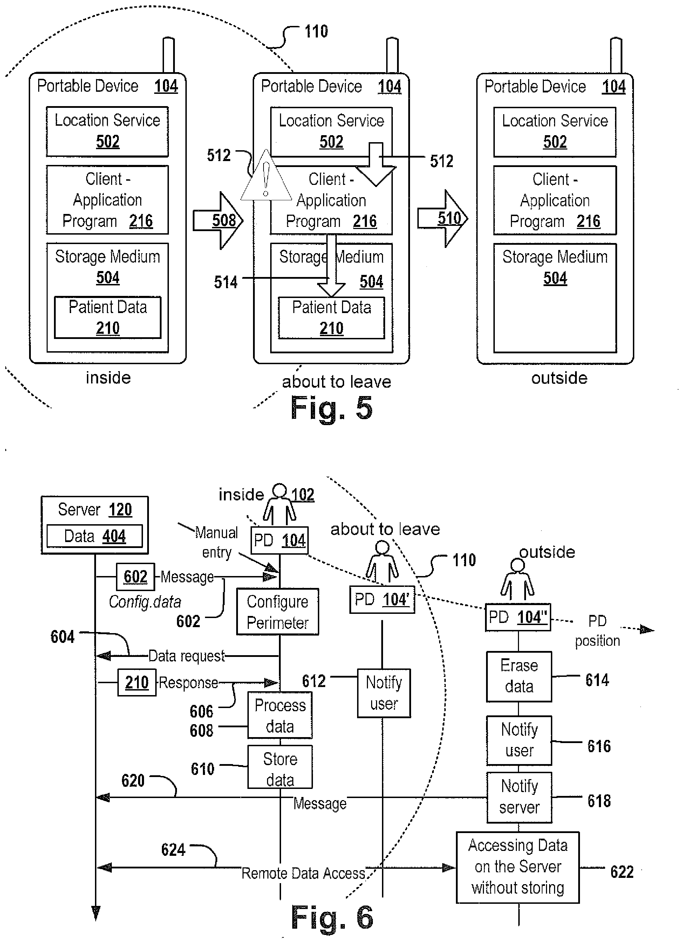

**Figure 4** shows some components of a server 120 and a portable device 104 according to another embodiment. The application program 216 comprises an interface 408.b for receiving sensitive data from a server application program 128 run by the server 120 and comprising a corresponding interface 408.a. Application programs 216 and 128 may be interoperable for transferring sensitive data from the server acting as a data source to the portable device. Thereby, application program 128 may act as server application program and application program 216 may act as corresponding client application program. Both application programs may exchange requests and respective responses as depicted in greater detail in figure 6.

**Figure 5** shows a single portable device 104 at three different positions inside, at the border of and outside of the security perimeter 110. The portable device comprises a positioning unit in the form of a location service 502 callable by the application program 216 for determining the current position of the portable device. Upon receiving a call of the application program 216, the location service executes the positioning module 218 and returns the current position to the application program 216. The application program 216 has access to a predefined and preferentially configurable set of location coordinates specifying the boundaries of the security perimeter 110. Said location coordinates may be stored in an internal storage medium of the portable device or an external storage medium accessible by the portable device. By comparing the current position with said location coordinates of the security perimeter the application program 216 will determine that it currently lies within the security perimeter and that the sensitive data 210 can be stored or kept stored on storage medium 504 without any security risk. Storage medium 504 may be volatile or non-volatile or a combination thereof.

Arrow 508 indicates that a user of the portable device approaches the boundary of the security perimeter. The application program 216 may call the location service 502 on a regular basis, e.g. every second. By comparing the current position of the portable device with the location coordinates of the security perimeter, the application program may determine if the portable device is less than a predefined, configurable minimum distance away from the boundary of the security perimeter. In this case, the application program 216 outputs a notification 512 to the user 102 that the sensitive data 210 is to be erased from the storage medium 504 if the user continues approaching the border of the security perimeter. For example, the security perimeter may be a circular area around a geographic point within a healthcare organization having a radius of 200 meter. The minimum distance may be 20 meter. Thus, an accidental erasure of the sensitive data by a user accidentally stepping outside the security perimeter can be prohibited. If the user intentionally wants to leave the security perimeter, he may finish data analysis and submit the evaluation results or control commands to the application program 128 running on a processing device within the security perimeter and interfacing with the application program 216 of the portable device. The sensitive data is then erased by the application program 216 upon the user leaving the security perimeter as indicated by arrow 510. At the "outside" position, the storage medium 504 does not comprise the sensitive data 210 anymore.

**Figure 6** depicts a process diagram of the server 120 and the portable device 104 exchanging some requests and respective responses which may be executed upon a user carrying the portable device outside the security perimeter 110. At the beginning, an operator of the server 120 may remotely configure the rules and/or the location coordinates specifying the security perimeter. A corresponding message 602 comprising the configuration data is transferred from the server 102 to the portable device 104. The configuration data is used for configuring the location coordinates of the security perimeter stored in a storage medium accessible by application program 216 of the portable device.

Then, the client application program 216 of the portable device residing within the security perimeter submits a data request 604 to the server and receives some sensitive data 210 contained in a respective response 606. The received sensitive data may be processed and evaluated by the user 102. The received and/or the processed sensitive data are stored in step 610 on a storage medium 504 of the portable device. The location service 502 may be called on a regular basis. As long as the user and the portable device reside within the security perimeter, additional data requests 604 and respective responses may be exchanged between the portable device and the server while processing and/or evaluating the sensitive data by the portable device and the user. In addition, there may be some control commands submitted by the portable device in response to a user action to the server for controlling the processing of a biological sample of by a lab device. In addition or alternatively, monitoring information may be received by the portable device from one or more lab devices or the analyzer directly or via the server 120.

In case the client application program 216 of the portable device determines that the user is about to leave the security perimeter, a notification is output in step 612 to the user for ensuring that the sensitive data is not erased accidentally and evaluation results might get lost because they could not be submitted to the server 120 in time before leaving the security perimeter. The notification may be an acoustic signal, a displayed warning message or the like.

Then, in case the portable device determines that its current position lies outside the security perimeter, the portable device (to be more particular: its application program 216) erases in step 614 the sensitive data stored on the storage medium 504 of the portable device. Finally, in step 616 the user may be notified that the sensitive data was erased. In addition or alternatively, in step 618 a message is sent from the portable device to the server for notifying to the server that the sensitive data was deleted.

According to some embodiments, a storage medium 402 of the server or being operatively coupled to the server also comprises the sensitive data and a synchronization of the sensitive data evaluated and modified on the portable device and the sensitive data on storage medium 402 is executed via automated request response cycles executed in the background. Thus, the sensitive data on storage medium 402 is continuously synchronized with the sensitive data stored on the storage medium of the portable device which may be modified by the user. In case a user has left the security perimeter and has the appropriate privileges, in step 622 the user may access the sensitive data stored in storage medium 402 directly via a network connection 624.

## Claims

1. A method for ensuring that sensitive data (210) stored in a first storage medium (206, 208, 504) of a portable device (104) are not accessible to unauthorized persons, the sensitive data comprising patient data, the sensitive data stored in the first storage medium being modifiable by a user, wherein the sensitive data is also stored on a second storage medium (402) coupled to a server (120), the method comprising:
- continuously synchronizing the sensitive data stored in the first storage medium on the portable device and the sensitive data stored in the second storage medium;
- the portable device determining (302) its current position (106, 116);
- the portable device determining (304) if its current position lies within a predefined security perimeter (110) surrounding an analyzer (112) of an analysis system (100);
- the portable device requesting the sensitive data from a data source (120, 112), the data source being a pre-analytical, analytical or post-analytical lab-device or a laboratory information system, the sensitive data comprising measurement data, monitoring data and/or status information received from the lab device, whereby the portable device requests the sensitive data only if its current position lies within the security perimeter at the moment of request submission; and
- receiving the requested sensitive data from the data source by the portable device;
- continuously repeating the determining of the current position, whereby in case the current position (106) is determined to lie outside the security perimeter, the portable device automatically erasing (306) the sensitive data from the first storage medium;
- in case the current position (106) is determined to lie outside the security perimeter, and in case in addition the user has appropriate privileges, accessing, by the user, the sensitive data stored in the second storage medium directly via a network connection (624) between the portable device and the server.

2. The method of any one of claims 1, wherein the erasing is executed in accordance with one or more rules (212), at least one of the rules comprising a user-dependent erasing policy, the method further comprising:
- the portable device receiving an identifier of the user;
- executing the rules, thereby taking the user identifier, the determined current position and the security perimeter as input, wherein in case the current position is determined to lie outside the security perimeter, the erasing is executed user-specifically, whereby the amount and/or kind of the sensitive data that is erased depends on the user identifier.

3. The method of any one of the previous claims, wherein erasing the sensitive data from the first storage medium comprises:
- erasing the sensitive data by formatting the first storage medium or formatting a partition comprising the sensitive data; or
- erasing the sensitive data by removing pointers to the sensitive data while leaving the sensitive data unchanged; or
- erasing the sensitive data by removing pointers to the sensitive data and overwriting the sensitive data with automatically generated data patterns; or
- changing or deleting a decryption key required for decrypting the sensitive data having been stored in the first storage medium in an encrypted form.

4. The method of any one of the previous claims, the erasing comprising:
- evaluating a data set comprising the sensitive data and selectively erasing the sensitive data while keeping the rest of the data set on the first storage medium.

5. The method of any one of the previous claims, the erasing comprising:
- storing identifiers of data records of the sensitive data to be erased in the first storage medium in a way as to enabling a restoring of the erased data records upon a future determination by the portable device that the current position of the portable device lies within the security perimeter.

6. The method of any one of the previous claims,
- the portable device displaying the lab-device operation data to the user;
- the portable device receiving control input data entered by the user via a user-interface in dependence on the displayed lab-device operation data;
- the portable device submitting a control command to a lab-device in accordance with the entered control input data only in case its current position lies within the security perimeter.

7. The method of any one of the previous claims, further comprising:
- the portable device currently lying within the security perimeter automatically determining that a current distance between the portable device and the border of the security perimeter (110) is below a distance threshold;
- In response to said determination, outputting a notification (512) via a user interface of the portable device to the user, the notification indicating that the user is about to leave the security perimeter and that the sensitive data in this case is to be erased.

8. The method of any one of the previous claims, wherein the portable device performs the erasing of the sensitive data in addition on any one of the following events:
- upon power-off of the portable device;
- upon a log-off event of the user from the portable device;
- upon shut-down of an application program (216) executed on the portable device and performing the method of anyone of the previous claims;
- upon a log-off event of the user from said application program;
- upon receipt of an erasure command triggered by the user interacting with the portable device;
- upon the portable device receiving an erasure command submitted by a data processing system (120) located within the security perimeter.

9. The method of any one of the previous claims, wherein the determining if the current position of the portable device lies within the security perimeter comprises:
- the portable device accessing geographic data being stored in the first storage medium (206, 208, 504) or in a further storage device (402) operatively coupled to the portable device, the geographic data comprising location coordinates specifying the security perimeter;
- determining if current geographic coordinates of the determined current position lie within the location coordinates of the security perimeter.

10. The method of any one of the previous claims, wherein the determination if the sensitive data is to be erased and the data erasing is performed by a first application program (216) executed on the portable device, the first application program being interoperable with a second application program (128) executed on a data processing device (120), the first and second application programs interactively enabling the user to:
- analyzing the sensitive data stored in the first storage medium; and/or
- editing or deleting individual data records of the sensitive data stored in the first storage medium of the portable device via an interface of the portable device, wherein any changes to said data records are automatically propagated to and synchronized with a copy of the sensitive data stored in the second (402) storage medium; and/or
- controlling a lab-device for stopping, initiating or rescheduling the pre-analytical, analytical or post-analytical processing of a patient sample in dependence on the sensitive data presented to the user via a graphical user interface of the first application program (216); and/or
- monitoring a lab-device (112) executing a pre-analytical, analytical or post-analytical processing of a patient sample (114).

11. The method of claim 10, wherein the determination if the sensitive data is to be erased, the data erasing, the monitoring and/or controlling are executed in a manner being depended on the user identifier or a role identifier and being dependent on the determined current position, wherein said dependency is implemented by means of rules executed by the first application program (216).

12. A computer-readable storage medium (208) comprising instructions which, when executed by a processor (204) of a portable device (104) cause the processor to perform the method of anyone of the previous claims.

13. An analysis system (100) which ensures that sensitive data are not accessible to unauthorized persons, the sensitive data comprising patient data, the analysis system comprising at least one analyzer (112) for analyzing biological samples, and a data source (120, 112), the data source being a pre-analytical, analytical or post-analytical lab-device or a laboratory information system, the sensitive data comprising measurement data, monitoring data and/or status information received from the lab device,
the analysis system further comprising a portable device (104) with:
- a processor (204);
- a first storage medium (208, 206, 504) comprising the sensitive data, the sensitive data stored in the first storage medium being modifiable by a user, whereby said sensitive data is also stored in a second storage medium (402) of a server (120) ;
- position determining means (218, 502) operable to determine a current position (106, 116) of the portable device;
- computer-interpretable instructions of an application program (216) which, upon execution by the processor, cause the application program to execute a method comprising:
∘ triggering the determination of the current position;
∘ determining (304) if its current position lies within a predefined security perimeter (110) surrounding the at least one analyzer (112);
∘ requesting the sensitive data from the data source (120, 112) only if its current position lies within the security perimeter at the moment of request submission;
∘ continuously repeating the determining of the current position, whereby in case the current position (106) is determined to lie outside a security perimeter surrounding the at least one analyzer, the portable device automatically erasing the sensitive data from the first storage medium;
the analysis system further comprising:
- means (408.a, 408.b) for continuously synchronizing the sensitive data stored in the first storage medium on the portable device and the sensitive data stored in the second storage medium, the analysis system enabling the user, in case the current position (106) is determined to lie outside the security perimeter, and in case in addition the user has appropriate privileges, to access the sensitive data stored in the second storage medium directly via a network connection (624) between the portable device and the server.

14. The analysis system of claim 13, further comprising a sample processing system, wherein at least parts of the sensitive data are collected from the at least one analyzer, the sample processing system comprising:
- a data processing unit (122) lying within the security perimeter and being operable to forward the collected sensitive data (210) to the application program of the portable device via a network;
- a configuration unit (124, 214) allowing the first user or a second user (126) to specify location coordinates of the security perimeter and/or to configure user-specific and/or position specific rules (212) determining how the erasing is executed.

## Patentansprüche

1. Verfahren zum Sicherstellen, dass in einem ersten Speichermedium (206, 208, 504) einer tragbaren Vorrichtung (104) gespeicherte sensible Daten (210) für unbefugte Personen nicht zugänglich sind, wobei die sensiblen Daten Patientendaten aufweisen, wobei die im ersten Speichermedium gespeicherten sensiblen Daten durch einen Benutzer modifizierbar sind, wobei die sensiblen Daten auch auf einem zweiten, mit einem Server (120) gekoppelten Speichermedium (402) gespeichert werden, wobei das Verfahren Folgendes aufweist:
- kontinuierliches Synchronisieren der im ersten Speichermedium an der tragbaren Vorrichtung gespeicherten sensiblen Daten und der im zweiten Speichermedium gespeicherten sensiblen Daten;
- durch die tragbare Vorrichtung Bestimmen (302) ihrer aktuellen Position (106, 116);
- durch die tragbare Vorrichtung Bestimmen (304), ob ihre aktuelle Position innerhalb eines vordefinierten Sicherheitsbereichs (110) liegt, der eine Analyseeinrichtung (112) eines Analysesystems (100) umgibt;
- durch die tragbare Vorrichtung Anfordern der sensiblen Daten aus einer Datenquelle (120, 112), wobei die Datenquelle eine voranalytische, analytische oder nachanalytische Laborvorrichtung oder ein Laborinformationssystem ist, wobei die sensiblen Daten aus der Laborvorrichtung empfangene Messdaten, Überwachungsdaten und/oder Statusinformationen aufweisen, so dass die tragbare Vorrichtung die sensiblen Daten nur anfordert, wenn ihre aktuelle Position im Augenblick der Anforderungseinsendung innerhalb des Sicherheitsbereichs liegt; und
- Empfangen der angeforderten sensiblen Daten aus der Datenquelle durch die tragbare Vorrichtung;
- kontinuierliches Wiederholen des Bestimmens der aktuellen Position, so dass im Fall, dass bestimmt wird, dass die aktuelle Position (106) außerhalb des Sicherheitsbereichs liegt, die tragbare Vorrichtung die sensiblen Daten automatisch aus dem ersten Speichermedium löscht (306);
- falls bestimmt wird, dass die aktuelle Position (106) außerhalb des Sicherheitsbereichs liegt, und, falls der Benutzer außerdem entsprechende Privilegien hat, direktes Zugreifen auf die im zweiten Speichermedium gespeicherten sensiblen Daten durch den Benutzer über eine Netzverbindung (624) zwischen der tragbaren Vorrichtung und dem Server.

2. Verfahren nach Anspruch 1, wobei das Löschen gemäß einer oder mehr Regeln (212) ausgeführt wird, wobei wenigstens eine der Regeln eine benutzerabhängige Löschvorschrift aufweist, wobei das Verfahren ferner Folgendes aufweist:
- durch die tragbare Vorrichtung Empfangen einer Kennung des Benutzers;
- Ausführen der Regeln, dabei Nehmen der Benutzerkennung, der bestimmten aktuellen Position und des Sicherheitsbereichs als Eingabe, wobei im Fall, dass bestimmt wird, dass die aktuelle Position außerhalb des Sicherheitsbereichs liegt, das Löschen benutzerspezifisch ausgeführt wird, so dass die Menge und/oder Art der sensiblen Daten, die gelöscht werden, von der Benutzerkennung abhängt.

3. Verfahren nach einem der vorhergehenden Ansprüche, wobei das Löschen der sensiblen Daten aus dem ersten Speichermedium Folgendes aufweist:
- Löschen der sensiblen Daten durch Formatieren des ersten Speichermediums oder Formatieren einer die sensiblen Daten aufweisenden Partition; oder
- Löschen der sensiblen Daten durch Entfernen von Zeigern auf die sensiblen Daten, während die sensiblen Daten unverändert belassen werden; oder
- Löschen der sensiblen Daten durch Entfernen von Zeigern auf die sensiblen Daten und Überschreiben der sensiblen Daten mit automatisch generierten Datenmustern; oder
- Ändern oder Löschen eines Entschlüsselungsschlüssels, der zum Entschlüsseln der sensiblen Daten erforderlich ist, die in einer verschlüsselten Form im ersten Speichermedium gespeichert wurden.

4. Verfahren nach einem der vorhergehenden Ansprüche, wobei das Löschen Folgendes aufweist:
- Auswerten eines Datensatzes, der die sensiblen Daten aufweist, und selektives Löschen der sensiblen Daten, während der Rest des Datensatzes auf dem ersten Speichermedium gehalten wird.

5. Verfahren nach einem der vorhergehenden Ansprüche, wobei das Löschen Folgendes aufweist:
- Speichern von Kennungen von Datenaufzeichnungen der sensiblen Daten, die im ersten Speichermedium zu löschen sind, auf eine Weise, die bei einer zukünftigen Bestimmung durch eine tragbare Vorrichtung, dass die aktuelle Position der tragbaren Vorrichtung innerhalb des Sicherheitsbereichs liegt, eine Wiederherstellung der gelöschten Datenaufzeichnungen ermöglicht.

6. Verfahren nach einem der vorhergehenden Ansprüche,
- wobei die tragbare Vorrichtung dem Benutzer die Betriebsdaten der Laborvorrichtung anzeigt,
- wobei die tragbare Vorrichtung Steuerungseingabedaten empfängt, die vom Benutzer über eine Benutzerschnittstelle in Abhängigkeit von den angezeigten Betriebsdaten der Laborvorrichtung eingegeben wurden;
- wobei die tragbare Vorrichtung einen Steuerbefehl an eine Laborvorrichtung gemäß den eingegebenen Steuerungseingabedaten nur in dem Fall einsendet, dass ihre aktuelle Position innerhalb des Sicherheitsbereichs liegt.

7. Verfahren nach einem der vorhergehenden Ansprüche, das ferner Folgendes aufweist:
- automatisches Bestimmen durch die aktuell innerhalb des Sicherheitsbereichs liegende tragbare Vorrichtung, dass ein aktueller Abstand zwischen der tragbaren Vorrichtung und der Grenze des Sicherheitsbereichs (110) unter einem Abstandsschwellenwert ist;
- als Reaktion auf die genannte Bestimmung Ausgeben einer Benachrichtigung (512) über eine Benutzerschnittstelle der tragbaren Vorrichtung an den Benutzer, wobei die Benachrichtigung angibt, dass der Benutzer den Sicherheitsbereich in Kürze verlassen wird und dass die sensiblen Daten in diesem Fall zu löschen sind.

8. Verfahren nach einem der vorhergehenden Ansprüche, wobei die tragbare Vorrichtung das Löschen der sensiblen Daten zusätzlich zu jedwedem der folgenden Ereignisse durchführt:
- beim Ausschalten der tragbaren Vorrichtung;
- im Fall eines Ausloggens des Benutzers aus der tragbaren Vorrichtung;
- beim Unterbrechen eines an der tragbaren Vorrichtung ausgeführten Anwendungsprogramms (216) und Durchführen des Verfahrens nach einem der vorhergehenden Ansprüche;
- im Fall eines Ausloggens des Benutzers aus dem genannten Anwendungsprogramm;
- bei Empfang eines Löschungsbefehls, der durch Interaktion des Benutzers mit der tragbaren Vorrichtung ausgelöst wird;
- bei Empfang eines Löschungsbefehls durch die tragbare Vorrichtung, der von einem innerhalb des Sicherheitsbereichs befindlichen Datenverarbeitungssystem (120) eingesendet wurde.

9. Verfahren nach einem der vorhergehenden Ansprüche, wobei das Bestimmen, ob die aktuelle Position der tragbaren Vorrichtung innerhalb des Sicherheitsbereichs liegt, Folgendes aufweist:
- durch die tragbare Vorrichtung Zugreifen auf im ersten Speichermedium (206, 208, 504) oder in einer weiteren, funktionell mit der tragbaren Vorrichtung gekoppelten Speichervorrichtung (402) gespeicherte geografische Daten, wobei die geografischen Daten den Sicherheitsbereich vorgebende Ortskoordinaten aufweisen;
- Bestimmen, ob aktuelle geografische Koordinaten der bestimmten aktuellen Position innerhalb der Ortskoordinaten des Sicherheitsbereichs liegen.

10. Verfahren nach einem der vorhergehenden Ansprüche, wobei die Bestimmung, ob die sensiblen Daten zu löschen sind, und das Löschen der Daten von einem an der tragbaren Vorrichtung ausgeführten ersten Anwendungsprogramm (216) durchgeführt werden, wobei das erste Anwendungsprogramm mit einem zweiten, an einer Datenverarbeitungsvorrichtung (120) ausgeführten Anwendungsprogramm (128) interoperabel ist, wobei das erste und das zweite Anwendungsprogramm den Benutzer interaktiv befähigen zum:
- Analysieren der im ersten Speichermedium gespeicherten sensiblen Daten; und/oder
- Bearbeiten oder Löschen einzelner Dateneinträge der im ersten Speichermedium der tragbaren Vorrichtung gespeicherten sensiblen Daten über eine Schnittstelle der tragbaren Vorrichtung, wobei Änderungen an den genannten Dateneinträgen automatisch an eine bzw. mit einer Kopie der im zweiten (402) Speichermedium gespeicherten sensiblen Daten verbreitet und synchronisiert werden; und/oder
- Steuern einer Laborvorrichtung zum Anhalten, Einleiten oder Umplanen der voranalytischen, analytischen oder nachanalytischen Verarbeitung einer Patientenprobe in Abhängigkeit von den sensiblen Daten, die dem Benutzer über eine grafische Benutzeroberfläche des ersten Anwendungsprogramms (216) präsentiert werden; und/oder
- Überwachen einer Laborvorrichtung (112), die eine voranalytische, analytische oder nachanalytische Verarbeitung einer Patientenprobe (114) ausführt.

11. Verfahren nach Anspruch 10, wobei die Bestimmung, ob die sensiblen Daten zu löschen sind, das Datenlöschen, das Überwachen und/oder das Steuern auf eine von der Benutzerkennung oder einer Aufgabenkennung abhängige und von der bestimmten aktuellen Position abhängige Weise ausgeführt werden, wobei die genannte Abhängigkeit mittels durch das erste Anwendungsprogramm (215) ausgeführten Regeln implementiert wird.

12. Computerlesbares Speichermedium (208) das Anweisungen aufweist, die bei Ausführung durch einen Prozessor (204) einer tragbaren Vorrichtung (104) den Prozessor zum Durchführen des Verfahrens nach einem der vorhergehenden Ansprüche veranlassen.

13. Analysesystem (100), das sicherstellt, dass sensible Daten für unbefugte Personen nicht zugänglich sind, wobei die sensiblen Daten Patientendaten aufweisen, wobei das Analysesystem wenigstens eine Analyseeinrichtung (112) zum Analysieren biologischer Proben und eine Datenquelle (120, 112) aufweist, wobei die Datenquelle eine voranalytische, analytische oder nachanalytische Laborvorrichtung oder ein Laborinformationssystem ist, wobei die sensiblen Daten aus der Laborvorrichtung empfangene Messdaten, Überwachungsdaten und/oder Statusinformationen aufweisen, wobei das Analysesystem ferner eine tragbare Vorrichtung (104) aufweist mit:
- einem Prozessor (204);
- einem ersten Speichermedium (208, 206, 504), das die sensiblen Daten aufweist, wobei die im ersten Speichermedium gespeicherten sensiblen Daten durch einen Benutzer modifizierbar sind, so dass die genannten sensiblen Daten auch in einem zweiten Speichermedium (402) eines Servers (120) gespeichert werden;
- einem Positionsbestimmungsmittel (218, 502), das zum Bestimmen einer aktuellen Position (106, 116) der tragbaren Vorrichtung funktionell ist;
- computerinterpretierbaren Anweisungen eines Anwendungsprogramms (216), die bei Ausführung durch den Prozessor das Anwendungsprogramm zum Ausführen eines Verfahrens veranlassen, das Folgendes aufweist:
∘ Auslösen der Bestimmung der aktuellen Position;
∘ Bestimmen (304), ob ihre aktuelle Position innerhalb eines vorbestimmten Sicherheitsbereichs (110) liegt, der die wenigstens eine Analyseeinrichtung (112) umgibt;
∘ Anfordern der sensiblen Daten aus der Datenquelle (120, 112) nur, wenn ihre aktuelle Position im Augenblick der Anforderungseinsendung innerhalb des Sicherheitsbereichs liegt;
∘ kontinuierliches Wiederholen des Bestimmens der aktuellen Position, so dass im Fall, dass bestimmt wird, dass die aktuelle Position (106) außerhalb eines Sicherheitsbereichs liegt, der die wenigstens eine Analyseeinrichtung umgibt, die tragbare Vorrichtung die sensiblen Daten automatisch aus dem ersten Speichermedium löscht;
wobei das Analysesystem ferner Folgendes aufweist:
- ein Mittel (408.a, 408.b) zum kontinuierlichen Synchronisieren der im ersten Speichermedium an der tragbaren Vorrichtung gespeicherten sensiblen Daten und der im zweiten Speichermedium gespeicherten sensiblen Daten, wobei das Analysesystem den Benutzer in dem Fall, dass bestimmt wird, dass die aktuelle Position (106) außerhalb des Sicherheitsbereichs liegt, und in dem Fall, dass der Benutzer außerdem zutreffende Privilegien hat, zum direkten Zugreifen auf die im zweiten Speichermedium gespeicherten sensiblen Daten über eine Netzverbindung (624) zwischen der tragbaren Vorrichtung und dem Server befähigt.

14. Analysesystem nach Anspruch 13, das ferner ein Probenverarbeitungssystem aufweist, wobei wenigstens Teile der sensiblen Daten aus der wenigstens einen Analyseeinrichtung erfasst werden, wobei das Probenverarbeitungssystem Folgendes aufweist:
- eine Datenverarbeitungseinheit (122), die innerhalb des Sicherheitsbereichs liegt und zum Weiterleiten der erfassten sensiblen Daten (210) über ein Netzwerk an das Anwendungsprogramm der tragbaren Vorrichtung betätigt werden kann;
- eine Konfigurationseinheit (124, 214), die den ersten Benutzer oder einen zweiten Benutzer (126) Ortskoordinaten des Sicherheitsbereichs vorgeben und/oder benutzerspezifische und/oder positionsspezifische Regeln (212), die bestimmen, wie das Löschen auszuführen ist, konfigurieren lässt.

## Revendications

1. Procédé assurant que des données sensibles (210) stockées dans un premier support de stockage (206, 208, 504) d'un dispositif portable (104) ne sont pas accessibles à des personnes non autorisées, les données sensibles comprenant des données de patients, les données sensibles étant stockées dans le premier support de stockage qui est modifiable par un utilisateur, où les données sensibles sont également stockées dans un second support de stockage (402) couplé à un serveur (120), le procédé comprenant :
- une synchronisation de manière continue des données sensibles stockées dans le premier support de stockage sur le dispositif portable et des données sensibles stockées dans le second support de stockage ;
- le dispositif portable déterminant (302) sa position à l'instant présent (106, 116) ;
- le dispositif portable déterminant (304) si sa position à l'instant présent se situe à l'intérieur d'un périmètre de sécurité prédéfini (110) entourant un analyseur (112) d'un système d'analyse (100) ;
- le dispositif portable demandant les données sensibles à partir d'une source de données (120, 112), la source de données étant un dispositif de laboratoire pré analytique, analytique ou post analytique, ou un système d'information de laboratoire, les données sensibles comprenant des données de mesure, des données de surveillance et/ou une information d'état reçues depuis le dispositif de laboratoire, moyennant quoi le dispositif portable demande les données sensibles uniquement si sa position à l'instant présent se situe à l'intérieur du périmètre de sécurité au moment de la présentation de la demande ; et
- la réception par le dispositif portable des données sensibles demandées provenant de la source de données ;
- la répétition de manière continue de la détermination de la position à l'instant présent, moyennant quoi dans le cas où la position à l'instant présent (106) est déterminée comme se situant à l'extérieur du périmètre de sécurité, le dispositif portable efface (306) automatiquement les données sensibles provenant du premier support de stockage ;
- dans le cas où la position à l'instant présent (106) est déterminée comme se situant à l'extérieur du périmètre de sécurité, et dans le cas où l'utilisateur dispose en plus de privilèges appropriés, l'accès, par l'utilisateur, aux données sensibles stockées dans le second support de stockage directement par l'intermédiaire d'une connexion réseau (624) entre le dispositif portable et le serveur.

2. Procédé selon l'une quelconque des revendications 1, dans lequel l'effacement est exécuté conformément à une ou plusieurs règles (212), au moins une des règles comprenant une action d'effacement dépendant de l'utilisateur, le procédé comprenant en outre :
- la réception par le dispositif portable d'un identifiant de l'utilisateur ;
- l'exécution des règles, prenant ainsi l'identifiant de l'utilisateur, la position déterminée à l'instant présent et le périmètre de sécurité en tant qu'entrées, où dans le cas où la position à l'instant présent est déterminée comme se situant à l'extérieur du périmètre de sécurité, l'effacement est exécuté spécifiquement par l'utilisateur, moyennant quoi la quantité et/ou le type des données sensibles qui sont effacées repose sur l'identifiant de l'utilisateur.

3. Procédé selon l'une quelconque des revendications précédentes, dans lequel l'effacement des données sensibles provenant du premier support de stockage comprend :
- l'effacement des données sensibles par le formatage du premier support de stockage ou le formatage d'une partition comprenant les données sensibles ; ou
- l'effacement des données sensibles en supprimant les pointeurs sur les données sensibles tout en laissant les données sensibles inchangées ; ou
- l'effacement des données sensibles en supprimant les pointeurs sur les données sensibles et en écrasant les données sensibles avec des modèles de données générés automatiquement ;
ou
- la modification ou la suppression d'une clé de décryptage nécessaire pour décrypter les données sensibles qui ont été stockées dans le premier support de stockage sous forme cryptée.

4. Procédé selon l'une quelconque des revendications précédentes, l'effacement comprenant :
- l'évaluation d'un ensemble de données comprenant les données sensibles et l'effacement de manière sélective des données sensibles tout en conservant le reste de l'ensemble des données dans le premier support de stockage.

5. Procédé selon l'une quelconque des revendications précédentes, l'effacement comprenant :
- le stockage des identifiants des enregistrements des données sensibles à effacer dans le premier support de stockage de manière à permettre une restauration des enregistrements des données effacées au moment d'une future détermination par le dispositif portable que la position actuelle du dispositif portable situe à l'intérieur du périmètre de sécurité.

6. Procédé selon l'une quelconque des revendications précédentes,
- le dispositif portable affichant les données de l'opération du dispositif de laboratoire à l'utilisateur ;
- le dispositif portable recevant les données d'entrée de commande entrées par l'utilisateur par l'intermédiaire d'une interface utilisateur en fonction des données de l'opération du dispositif de laboratoire affichées ;
- le dispositif portable présentant une commande de contrôle à un dispositif de laboratoire conformément aux données d'entrée de commande entrées uniquement dans le cas où sa position à l'instant présent se situe à l'intérieur du périmètre de sécurité.

7. Procédé selon l'une quelconque des revendications précédentes, comprenant en outre :
- le dispositif portable se situant présentement à l'intérieur du périmètre de sécurité, la détermination de manière automatique qu'une distance à l'instant présent entre le dispositif portable et la limite du périmètre de sécurité (110) est en dessous d'un seuil de distance ;
- en réponse à ladite détermination, l'émission d'une notification (512) par l'intermédiaire d'une interface utilisateur du dispositif portable à l'intention de l'utilisateur, la notification indiquant que l'utilisateur est sur le point de quitter le périmètre de sécurité et que, dans ce cas, les données sensibles doivent être effacées.

8. Procédé selon l'une quelconque des revendications précédentes, dans lequel le dispositif portable effectue en plus l'effacement des données sensibles lors de l'un quelconque des événements suivants :
- au moment de la mise hors tension du dispositif portable ;
- au moment d'un événement de déconnexion de l'utilisateur du dispositif portable ;
- au moment de la fermeture d'un programme d'application (216) exécuté sur le dispositif portable et effectuant le procédé selon l'une quelconque des revendications précédentes ;
- au moment d'un événement de déconnexion de l'utilisateur dudit programme d'application ;
- au moment de la réception d'une commande d'effacement déclenchée par l'utilisateur qui communique avec le dispositif portable ;
- au moment de la réception par le dispositif portable d'une commande d'effacement adressée par un système de traitement des données (120) situé à l'intérieur du périmètre de sécurité.

9. Procédé selon l'une quelconque des revendications précédentes, dans lequel l'action pour déterminer si la position à l'instant présent du dispositif portable se situe à l'intérieur du périmètre de sécurité comprend :
- l'accès du dispositif portable aux données géographiques qui sont stockées dans le premier support de stockage (206, 208, 504) ou dans un autre dispositif de stockage (402) couplé de manière fonctionnelle au dispositif portable, les données géographiques comprenant les coordonnées de la position indiquant le périmètre de sécurité ;
- une action pour déterminer si les coordonnées géographiques à l'instant présent de la position déterminée à l'instant présent se situent parmi les coordonnées de la position du périmètre de sécurité.

10. Procédé selon l'une quelconque des revendications précédentes, dans lequel l'action pour déterminer si les données sensibles doivent être effacées et l'effacement des données sont effectués par un premier programme d'application (216) exécuté sur le dispositif portable, le premier programme d'application étant exploitable en association avec un second programme d'application (128) exécuté sur un dispositif de traitement des données (120), le premier et le second programme d'application autorisant de manière interactive l'utilisateur à :
- analyser les données sensibles stockées dans le premier support de stockage ; et/ou
- éditer ou supprimer les enregistrements des données individuelles des données sensibles stockées dans le premier support de stockage du dispositif portable par l'intermédiaire d'une interface du dispositif portable, où toute modification desdits enregistrements de données est automatiquement transmise et est synchronisée avec une sauvegarde des données sensibles stockées dans le second support de stockage (402) ; et/ou
- commander à un dispositif de laboratoire de s'arrêter, d'initialiser ou de reprogrammer le traitement pré analytique, analytique ou post analytique d'un échantillon d'un patient en fonction des données sensibles présentées à l'utilisateur par l'intermédiaire d'une interface utilisateur graphique du premier programme d'application (216) ; et/ou
- surveiller un dispositif de laboratoire (112) exécutant un traitement pré analytique, analytique ou post analytique d'un échantillon de patient (114).

11. Procédé selon la revendication 10, dans lequel l'action pour déterminer si les données sensibles doivent être effacées, l'effacement des données, la surveillance et/ou la commande sont exécutés d'une manière qui dépend de l'identifiant de l'utilisateur ou d'un identifiant de fonction et qui dépend de la position déterminée à l'instant présent, où ladite dépendance est mise en oeuvre au moyen des règles exécutées par le premier programme d'application (216).

12. Support de stockage lisible par ordinateur (208) comprenant des instructions qui, lorsqu'elles sont exécutées par un processeur (204) d'un dispositif portable (104), amènent le processeur à effectuer le procédé selon l'une quelconque des revendications précédentes.

13. Système d'analyse (100) qui garantit que les données sensibles ne sont pas accessibles aux personnes non autorisées, les données sensibles comprenant des données de patients, le système d'analyse comprenant au moins un analyseur (112) pour analyser des échantillons biologiques, et une source de données (120, 112), la source de données étant un dispositif de laboratoire pré analytique, analytique ou post analytique ou un système d'information de laboratoire, les données sensibles comprenant des données de mesure, des données de surveillance et/ou une information d'état reçues provenant du dispositif de laboratoire,
le système d'analyse comprenant en outre un dispositif portable (104) doté :
- d'un processeur (204) ;
- d'un premier support de stockage (208, 206, 504) comprenant les données sensibles, les données sensibles stockées dans le premier support de stockage étant modifiables par un utilisateur, moyennant quoi lesdites données sensibles sont également stockées dans un second support de stockage (402) d'un serveur (120) ;
- de moyens de détermination de la position (218, 502) destinés à déterminer la position à l'instant présent (106, 116) du dispositif portable ;
- des instructions interprétables par ordinateur d'un programme d'application (216) qui, au moment de leur exécution par le processeur, amènent le programme d'application à exécuter un procédé comprenant :
∘ le déclenchement de la détermination de la position à l'instant présent ;
∘ l'action pour déterminer (304) si la position à l'instant présent se situe à l'intérieur d'un périmètre de sécurité prédéfini (110) entourant l'au moins un analyseur (112) ;
∘ la demande des données sensibles provenant de la source de données (120, 112) uniquement si sa position à l'instant présent se situe à l'intérieur du périmètre de sécurité au moment de la présentation de la demande ;
∘ la répétition de manière continue de la détermination de la position à l'instant présent, moyennant quoi, dans le cas où la position à l'instant présent (106) est déterminée comme se situant en dehors d'un périmètre de sécurité entourant l'au moins un analyseur, le dispositif portable efface automatiquement les données sensibles provenant du premier support de stockage ;
le système d'analyse comprenant en outre :
- des moyens (408.a, 408.b) pour la synchronisation de manière continue des données sensibles stockées dans le premier support de stockage dans le dispositif portable et des données sensibles stockées dans le second support de stockage, le système d'analyse autorisant l'utilisateur, dans le cas où la position à l'instant présent (106) est déterminée comme étant située à l'extérieur du périmètre de sécurité, et dans le cas où l'utilisateur dispose en plus de privilèges appropriés, à accéder aux données sensibles stockées dans le second support de stockage directement par l'intermédiaire d'une connexion réseau (624) entre le dispositif portable et le serveur.

14. Système d'analyse selon la revendication 13, comprenant en outre un système de traitement d'un échantillon, dans lequel au moins une partie des données sensibles est collectée à partir de l'au moins un analyseur, le système de traitement de l'échantillon comprenant :
- une unité de traitement des données (122) située à l'intérieur du périmètre de sécurité et qui est destinée à transférer les données sensibles collectées (210) vers le programme d'application du dispositif portable par l'intermédiaire d'un réseau ;
- une unité de configuration (124, 214) permettant au premier utilisateur ou à un second utilisateur (126) de préciser les coordonnées de la position du périmètre de sécurité et/ou de configurer des règles spécifiques à l'utilisateur et/ou spécifiques à la position (212) déterminant de quelle manière l'effacement est exécuté.
